Europäisches Patentamt

European Patent Office

Office européen des brevets

(11) Veröffentlichungsnummer: **0 339 449**
A1

## (12) EUROPÄISCHE PATENTANMELDUNG

(21) Anmeldenummer: 89106981.7

(22) Anmeldetag: 19.04.89

(51) Int. Cl.⁴: **A01N 25/30** , **A01N 31/02** ,
**A01N 31/08** , **A01N 35/02** ,
**A01N 37/16** , **A01N 59/00** ,
**A01N 59/12**

(30) Priorität: 27.04.88 DE 3814202

(43) Veröffentlichungstag der Anmeldung:
02.11.89 Patentblatt 89/44

(84) Benannte Vertragsstaaten:
ES

(71) Anmelder: Henkel Kommanditgesellschaft auf
Aktien
Postfach 1100 Henkelstrasse 67
D-4000 Düsseldorf 1(DE)

(72) Erfinder: Guhl, Walter, Dr.
Wiedenhoferstrasse 27
D-5657 Haan(DE)
Erfinder: Behler, Ansgar, Dr.
Siegfriedstrasse 80
D-4250 Bottrop(DE)

(54) **Parasitenabtötende Desinfektionsmittel.**

(57) Zur Bekämpfung und Abtötung von parasitären, invasionsfähigen Dauerformen eignen sich wässrige Desinfektionsmittelzusammensetzungen auf der Basis von Gemischen aus Desinfektionswirkstoffen und oberflächenaktiven Wirkstoffen, die

a) mindestens einen Desinfektionswirkstoff aus der aus aliphatischen Aldehyden mit 1 bis 5 C-Atomen, aliphatischen Alkoholen mit 1 bis 4 C-Atomen, unsubstituierten und substituierten Phenolen, Aktivchlor- Aktivsauerstoff- und Aktivjodverbindungen bestehenden Gruppe und

b) mindestens ein Sulfonatsalz eines Esters einer ungesättigten $C_{16}$-$C_{22}$-Fettsäure mit einem geradkettigen oder verzweigten aliphatischen $C_1$-$C_6$-Alkohol (UFSE-Sulfonat) enthalten.

EP 0 339 449 A1

**EP 0 339 449 A1**

## Parasitenabtötende Desinfektionsmittel

Die Erfindung betrifft Desinfektionsmittel zur Bekämpfung und Abtötung von parasitären Dauerformen auf der Basis von Gemischen aus desinfizierenden Wirkstoffen und oberflächenaktiven Wirkstoffen.

Die landwirtschaftliche Haltung und Zucht verschiedener Tierarten, beispielsweise Geflügel, Schweine oder Rinder, wird dadurch beeinträchtigt bzw. die Zuchterfolge werden dadurch gemindert, daß die genannten Tierarten von Coccidien und Spulwürmern befallen werden. Diese Parasitenarten schmarotzen im Darmtrakt und schädigen die Tiere durch Nährstoffentzug, Saug- und Einwanderungswunden und führen bei Massenbefall einzelner Tiere zu Leistungsdepression, Kümmern oder Tod, weil u.a. die von den Parasiten ausgeschiedenen Toxine auf das organische Gleichgewicht der Nutztiere einwirken.

Eine gezielte Wurm- bzw. Coccidienbekämpfung kann jedoch nicht darauf beschränkt werden, den von den Parasiten befallenen Nutztieren Wurm- bzw. Coccidienmittel zu verfüttern, um die Parasiten im Darmkanal abzutöten. Vielmehr muß bei der Parasitenbekämpfung berücksichtigt werden, daß die Schmarotzer sehr widerstandsfähige parasitäre Dauerformen (Spulwurmeier, Coccidienoozysten) ausscheiden, die mit dem Kot der befallenen Nutztiere an die Außenwelt gelangen und den Stall verseuchen. Diese Dauerformen sind erneut invasionsfähig, d.h. sie können wieder in den Nährstoffkreislauf der Nutztiere Eingang finden und dadurch von neuem in den Organismus der Nutztiere gelangen. Die Folge ist ein erneuter Befall mit Coccidien bzw. Spulwürmern.

Üblicherweise wird daher - in Ergänzung zu einer Verfütterung von Anti-Parasitenmitteln - gegen die ausgeschiedenen, wiederstandsfähigen Dauerformen der Parasiten eine Spezialdesinfektion der Stallungen durchgeführt, wodurch die Dauerformen abgetötet werden und der Kreislauf (Ausscheidung der Parasitendauerformen und Wiederaufnahme über den Kot) durch Desinfektion wirksam unterbrochen wird.

Für derartige Stalldesinfektionsmaßnahmen sind bereits Spezialdesinfektionsmittel auf der Basis von phenolischen Wirkstoffen und Schwefelkohlenstoff erfolgreich in Gebrauch. Dem Schwefelkohlenstoff fällt dabei die Aufgabe zu, die sehr festen Membranen der Parasiteneier oder -oozysten zu durchdringen und den phenolischen Wirkstoff zur Abtötung des Ei-bzw. Oozysteninhaltes in das Innere der Parasitendauerformen einzuschleusen. Der Einsatz von Schwefelkohlenstoff für derartige Zwecke ist jedoch wegen der hohen Explosionsgefahr von $CS_2$ und seiner starken Toxizität nicht unbedenklich.

In der DE-OS 23 17 225 wird zur Überwindung dieser Nachteile ein Mittel zur Stalldesinfektion auf der Basis von desinfizierend wirkenden Phenolen oder Phenolderivaten und einem die Membranen der parasitären Dauerformen durchdringenden Lösungsmittel vorgeschlagen, das als Lösungsmittel eine Kombination aus Perchlorethylen und einem niederen Alkohol enthält. Nachteil dieser Zusammensetzung zur Desinfektion gegen parasitäre, invasionsfähige Dauerformen ist jedoch der Anteil an Perchlorethylen, der mit 10 bis 50 Gew-% ausgesprochen hoch liegt. Chlorierte Kohlenwasserstoffe sind, wie inzwischen allgemein bekannt, als ausgesprochen langlebige Umweltgifte erkannt worden, die sich insbesondere im Fettgewebe höherer Organismen anreichern und in der Nahrungskette zu Dauerschäden in höheren Organismen führen können. Zudem erwiesen sich Mittel mit einem Gehalt an chlorierten Kohlenwasserstoffen in der Praxis als nicht so wirksam, daß sich diese hätten durchsetzen können. Aus ökologischen und ökonomischen Gründen sollte deswegen auf die Verwendung chlorierter Kohlenwasserstoffe in Desinfektionsmitteln zur Bekämpfung parasitärer Dauerformen weitgehend, besser vollständig, verzichtet werden.

Der Erfindung lag die Aufgabe zugrunde, Desinfektionsmittel für die Verwendung in der Bekämpfung und Abtötung parasitärer Dauerformen, wie Spulwurmeier oder Coccidienoozysten zur Verfügung zu stellen, die die genannten Nachteile des Standes der Technik nicht aufweisen. So sollte eine gezielte Wirksamkeit der Desinfektionsmittel gegen die genannten parasitären invasionsfähigen Dauerformen mit einer guten Handhabbarkeit kombiniert, d.h. insbesondere die aus der Verwendung von Schwefelkohlenstoff bekannte Explosionsgefahr bzw. Toxizität völlig vermieden werden. Zudem sollten ausschließlich Bestandteile in den Desinfektionsmitteln Verwendung finden, die keine Umweltgefährdung mit sich bringen, wie sie von chlorierten Kohlenwasserstoffen bekannt ist. Erwünscht war außerdem eine desinfizierende Wirkung auch gegenüber sonstigen, in Tierstallungen auftretenden Schädlingen, wie Pilzen, Bakterien oder Viren, deren Bekämpfung auf diese Weise gleichzeitg mit der Bekämpfung schwierig abzutötender parasitärer Formen erfolgen könnte.

Die Erfindung betrifft wässrige Desinfektionsmittelzusammensetzungen zur Bekämpfung und Abtötung von parasitären, in vasionsfähigen Dauerformen auf der Basis von Gemischen aus Desinfektionswirkstoffen und oberflächenaktiven Stoffen, die dadurch gekennzeichnet sind, daß sie

a) mindestens einen Desinfektionswirkstoff aus der aus aliphatischen Aldehyden mit 1 bis 5 C-Atomen, aliphatischen Alkoholen mit 1 bis 4 C-Atomen, unsubstituierten und substituierten Phenolen, Aktivchlor-, Aktivsauerstoff- und Aktivjodverbindungen bestehenden Gruppe und

2

b) mindestens ein Sulfonatsalz eines Esters einer ungesättigten $C_{16}$-$C_{22}$-Fettsäure mit einem geradkettigen oder verzweigten aliphatischen $C_1$-$C_6$-Alkohol (UFSE-Sulfonat) enthalten.

Die Erfindung betrifft außerdem die Verwendung der genannten Desinfektionsmittel zur Bekämpfung und Abtötung von parasitären, invasionsfähigen Dauerformen.

Die erfindungsgemäßen wässrigen Desinfektionsmittelzusammensetzungen zur Bekämpfung und Abtötung parasitärer, invasionsfähiger Dauerformen, insbesondere von Spulwurmeiern und Coccidienoozysten, enthalten im wesentlichen zwei Gruppen von Wirkstoffen: desinfizierend wirkende Substanzen und Sulfonatsalze von Estern ungesättigter $C_{16}$-$C_{22}$-Fettsäuren mit geradkettigen oder verzweigten aliphatischen $C_1$-$C_6$-Alkoholen (UFSE-Sulfonate) als oberflächenaktive Wirkstoffe. Gegebenenfalls können, wie weiter unten ausgeführt, noch andere Tenside und Desinfektionswirkstoffe sowie in derartigen Desinfektionsmitteln übliche Duft- und/oder Hilfsstoffe in den erfindungsgemäßen Mitteln enthalten sein. Als Lösemittel, das die Homogenität und Lagerbeständigkeit der Mittel wesentlich verbessert und ihre Auflösbarkeit in Wasser bei der Herstellung gebrauchsfertiger Desinfektionslösungen erleichtert, ist in den erfindungsgemäßen Desinfektionsmittelzusammensetzungen Wasser enthalten.

Als aliphatische Aldehyde kommen Formaldehyd, Acetaldehyd, Propionaldehyd, Butylaldehyd, Valeraldehyd und Dialdehyde wie beispielsweise Glyoxal oder Glutardialdehyd, in Frage. Von den genannten Aldehyden sind Formaldehyd, Glyoxal und Glutardialdehyd bevorzugt, da sie vergleichsweise leicht zugänglich sind und eine ausgezeichnete desinfizierende Wirkung ausüben. Mit besonderem Vorteil, d.h. mit besonders guter Wirksamkeit, wird als desinfizierender Wirkstoff in die erfindungsgemäßen Desinfektionsmittelzusammensetzungen Formaldehyd eingearbeitet.

Als aliphatische Alkohole kommen Methanol, Ethanol, n-Propanol, i-Propanol, n-Butanol, i-Butanol oder t-Butanol in Frage. Bevorzugt werden Methanol, Ethanol, n-Propanol und i-Propanol verwendet, wobei i-Propanol aufgrund seiner guten desinfizierenden Wirksamkeit als besonders bevorzugt zu nennen ist.

Aus der Gruppe der unsubstituierten oder substituierten Phenole kommen beispielsweise Phenol selbst, Kresole und substituierte, beispielsweise chlorierte Phenole und Kresole in Frage. Bevorzugt wird p-Chlor-m-kresol in den erfindungsgemäßen Zusammensetzungen eingesetzt, doch kommen auch andere Phenol- bzw. Kresolderivate wie o-Kresol, m-Kresol, p-Kresol, o-Phenylphenol, Pentachlorphenol oder Hexachlorophen in Frage. Aus der Gruppe der Phenole sind Phenol und chlorierte Phenole besonders bevorzugt.

Erfindungsgemäß können die Desinfektionsmittelzusammensetzungen als Desinfektionswirkstoffe auch Aktivchlor-, Aktivsauerstoff- und Aktivjodverbindungen enthalten. Beispiele für Verbindungen aus dieser Gruppe sind wasserlösliche Alkalimetallhypohalogenite, Wasserstoffperoxid, Peroxycarbonsäuren mit 1 bis 4 C-Atomen und deren wasserlösliche Salze sowie PVP-Jod (Polyvinylpyrrolidon-Jod). Als Peroxycarbonsäuren kommen Peroxyameisensäure, Peroxyessigsäure, Peroxypropionsäure oder Peroxybuttersäure in Betracht, wobei Peroxyessigsäure besondere Bedeutung hat, während die bevorzugte Aktivchlorverbindung Natriumhypochlorit ist.

Die in den erfindungsgemäßen wäßrigen Desinfektionsmittelzusammensetzungen als oberflächenaktive Wirkstoffe enthaltenen Sulfonatsalze von Estern ungesättigter $C_{16}$-$C_{22}$-Fettsäuren mit geradkettigen oder verzweigten aliphatischen $C_1$-$C_6$-Alkoholen, die hier auch als UFSE-Sulfonate bezeichnet werden, können durch Umsetzung von Gemischen aus ungesättigten und gesättigten Fettsäure-niedrigalkylestern mit gasförmigem Schwefeltrioxid bei einem molaren Einsatzverhältnis von Schwefeltrioxid zu ungesättigten Fettsäure-niedrigalkylestern von 1 : 1 bis 1,2 : 1 bei 15 bis 25 °C und unmittelbar anschließende Neutralisation und Hydrolyse des erhaltenen Produktes mit wässrigen Basen erhalten werden.

Als Ausgangsmaterial für die Herstellung der UFSE-Sulfonate setzt man Gemische von ungesättigten und gesättigten $C_{16}$-$C_{22}$-Fettsäureestern ein, die, bezogen auf das Gesamtgewicht der Fettsäurester, 70 bis 90 Gew.-% einfach ungesättigte $C_{16}$-$C_{22}$-Fettsäureester enthalten. Vorzugsweise werden hier Ester von technischen Ölsäuren eingesetzt, d.h. Ester von Fettsäureschnitten mit einem Ölsäureanteil von ca. 70 bis 90 Gew.-%. Als Ausgangsmaterial können aber auch petroselinsäure-/ oder erukasäurereiche Fettsäureesterfraktionen eingesetzt werden. Die Alkoholkomponente der ungesättigten Fettsäure-niedrigalkylester besteht aus geradkettigen oder verzweigten aliphatischen Alkoholen mit 1 bis 6 C-Atomen, wie Methanol, Ethanol, n-Propanol, i-Propanol, n-Butanol, i-Butanol und n-Hexanol.

Die Sulfonierung der eingesetzten Gemische von ungesättigten und gesättigten Fettsäure-niedrigalkylestern mit gasförmigem Schwefel trioxid kann in üblichen Sulfonierungsreaktoren, beispielsweise Fallfilmreaktoren, erfolgen. Dabei wird Schwefeltrioxid mit Luft oder Stickstoff verdünnt eingesetzt, vorzugsweise in Form eines Gasgemisches mit ca. 1 bis 10 Vol.-% Schwefeltrioxid.

Als Basen für die Neutralisation eignen sich vor allem Natrium-, Kalium- und Lithiumhydroxid, Ammoniak und Amine wie Ethanolamin, Diethanolamin und Triethanolamin.

Nach der Neutralisation des Reaktionsproduktes wird die Hydrolyse vorzugsweise bei Temperaturen von mindestens 70 °C und unter Zufuhr von wässriger Base zur Einhaltung eines pH-Wertes von 6 bis 8 durchgeführt.

Normalerweise kann man auf eine nachträgliche Abtrennung der nicht umgesetzten gesättigten Fettsäure-niedrigalkylester aus dem erhaltenen Reaktionsgemisch verzichten. Wenn jedoch eine Abtrennung dieser nichtsulfonierten Produkte gewünscht wird, kann man gemäß einer weiteren vorteilhaften Ausführungsform der Erfindung das neutralisierte und hydrolysierte Sulfonierungsprodukt bei Temperaturen von 50 bis 80 °C unter Ausschluß von chemischen Hilfsmitteln zur Phasentrennung in zwei Phasen trennen, wobei die eine Phase im wesentlichen die UFSE-Sulfonate und die andere Phase im wesentlichen die unsulfonierten gesättigten Fettsäure-niedrigalkylester enthält.

Die Herstellung der Sulfonatsalze von ungesättigten Fettsäure-niedrigalkylestern ist Gegenstand der anhängigen deutschen Patentanmeldung P 38 03 912.5.

In den erfindungsgemäßen wässrigen Desinfektionsmittelzusammensetzungen werden vorzugsweise UFSE-Sulfonate eingesetzt, die durch Sulfonierung von Estern technischer Ölsäure erhalten wurden.

Als Kationen können die UFSE-Sulfonate insbesondere Kalium, Lithium, Ammonium, Ethanolammonium, Diethanolammonium, Triethanolammonium und vorzugsweise Natrium enthalten.

Die Erfindung bezieht sich sowohl auf die gebrauchsfertigen wässrigen Desinfektionsmittelzusammensetzungen als auch auf Konzentrate, die zur Herstellung der gebrauchsfertigen Desinfektionsmittel zur Verfügung gestellt werden. Je nach der Wirksamkeit der desinfektionsaktiven Wirkstoffe, die einzeln oder in Kombination miteinander eingesetzt werden, können die Desinfektionsmittelzusammensetzungen, bezogen auf das Gesamtgewicht der wässrigen Präparationen, von 0,1 bis 80 Gew.-% des Desinfektionswirkstoffes aus der oben definierten Gruppe enthalten. An UFSE-Sulfonaten können die Desinfektionsmittelzusammensetzungen, bezogen auf das Gesamtgewicht der wässrigen Präparationen, von 0,5 bis 50 Gew.-% enthalten. Dabei ist die Konzentration abhängig von der mehr oder weniger ausgeprägten Fähigkeit der UFSE-Sulfonate, die natürliche Hülle der parasitären Dauerformen permeabel zu machen. Die zur direkten Anwendung bestimmten gebrauchsfertigen Desinfektionsmittelzusammensetzungen enthalten in der Regel, bezogen auf ihr Gesamtgewicht, insbesondere 0,1 bis 5 Gew.-% Desinfektionswirkstoff und 0,5 bis 3 Gew.-% UFSE-Sulfonate. Entsprechende Desinfektionsmittelkonzentrate werden zweckmäßigerweise so formuliert, daß sie, bezogen auf das Gesamtgewicht der wässrigen Zusammensetzung, 5 bis 80 Gew.-% Desinfektionswirkstoffe aus der oben definierten Gruppe und 10 bis 50 Gew.-% UFSE-Sulfonate enthalten.

In einer speziellen Ausführungsform der Erfindung enthalten die wässrigen Desinfektionsmittelzusammensetzungen neben den UFSE-Sulfonaten mindestens einen endgruppenverschlossenen Fettalkoholpolyalkylenglykolether der Formel (I),

$$R^2 - O - (C_nH_{2n}O)_m - R^3 \qquad (I)$$

in der $R^2$ für einen geradkettigen oder verzweigten Alkyl- oder Alkenylrest mit 8 bis 18 C-Atomen, $R^3$ für einen geradkettigen oder verzweigten Alkylrest mit 1 bis 18 C-Atomen, n für 2 oder 3 und m für eine Zahl im Bereich von 1 bis 50 stehen.

Bei den Verbindungen der Formel (I) handelt es sich um bekannte Substanzen, die nach gängigen Verfahren organischen Synthese erhältlich sind. Beispielsweise können diese endgruppenverschlossenen Fettalkoholpolyalkylenglykolether dadurch erhalten werden, daß man entsprechende Anlagerungsprodukte des Ethylenoxids und/oder Propylenoxids im Zuge einer Williamson-Ethersynthese in Gegenwart von konzentrierten wässrigen Alkalimetallhydroxidlösungen mit Alkylhalogeniden umsetzt.

Der in der Formel (I) erscheinende Alkyl- oder Alkenylrest $R^2$ stammt aus einem nativen oder synthetischen Fettalkohol mit 8 bis 18 C-Atomen oder aus einem Gemisch solcher Fettalkohole. Wenn die durch das Strukturelement $-(C_nH_{2n}O)_m$ - dargestellte Polyalkylenglykoletherkette gleichzeitig Ethylenglykol- und Propylenglykolreste enthält, so können die entsprechenden Alkyl- und/oder Alkenylpolyalkylenglykolether sowohl durch Block- als auch durch Randompolymerisation erhalten worden sein.

Aus der Gruppe der endgruppenverschlossenen Fettalkoholpolyalkylenglykolether kommen insbesondere solche in Betracht, bei denen in der Formel (I) $R^2$ für einen geradkettigen Alkylrest mit 12 bis 18 C-Atomen, $R^3$ für einen geradkettigen oder verzweigten Alkyl-rest mit 3 oder 4 C-Atomen, n für 2 und m für Zahlen von 3 bis 10 stehen. Besonders bevorzugt werden hierbei Verbindungen, bei denen in der Formel (I) $R^2$ für ein Gemisch aus Alkyl- und Alkenylresten mit 12 bis 18 C-Atomen und $R^3$ für einen n-Butylrest stehen, während n = 2 ist und m im Bereich von 8 bis 10 liegt. Es hat sich gezeigt, daß erfindungsgemäße wässrige Desinfektionsmittelzusammensetzungen, die als oberflächenaktive Wirkstoffe eine Kombination aus UFSE-Sulfonaten und Verbindungen der Formel (I) enthalten, sich durch eine besonders gute Wirksamkeit gegenüber den Dauerformen von Ascariden (Spulwürmern) auszeichnen. Für die wässrigen Desinfektionsmittelzusammensetzungen dieser speziellen Ausführungsform der Erfindung gelten bezüglich der Konzentrationen der vorhandenen Wirkstoffe die weiter oben gemachten Angaben in dem Sinn, daß die endgruppenverschlossenen Fettalkoholpolyalkylenglykolether der Formel (I) einen Teil der UFSE-Sulfonate ersetzen. Dabei kann das Gewichtsverhältnis der UFSE-Sulfonate zu den Verbindungen der Formel (I) im Bereich von 1 : 0,1 bis 1 : 1 liegen.

Neben den Desinfektionswirkstoffen aus der weiter oben definierten Gruppe können in die erfindungsgemäßen Zusammensetzungen weitere bekannte Desinfektionswirkstoffe eingearbeitet werden, um ein möglichst breites Wirkungsspektrum auch gegenüber Pilzen, Bakterien und Viren zu erzielen. Die erfindungsgemäßen Zusammensetzungen können zusätzlich beispielsweise quartäre Ammoniumverbindungen, insbesondere Alkylbenzyldimethylammoniumhalogenide mit 10 bis 14 C-Atomen im Alkylrest, und antimikrobiell wirksame Biguanidverbindungen, wie Halogenwasserstoffsalze von oligomeren Hexamethylenbiguaniden und wasserlösliche Salze von Chlorhexidin enthalten.

Mit dem Ziel, durch die erfindungsgemäßen wässrigen Desinfektionsmittelzusammensetzungen auch bestimmte Reinigungseffekte zu erreichen, können in die Zusammensetzungen außer den UFSE-Sulfonaten und den Verbindungen der Formel (I) auch noch andere bekannte nichtionische, anionische, kationische oder ampholytische oberflächenaktive Substanzen eingearbeitet werden. Darüberhinaus können den erfindungsgemäßen Zusammensetzungen die in solchen Mitteln üblichen Duft- und Farbstoffe sowie zur Einstellung eines bestimmten pH-Wertes Alkalien oder Mineralsäuren zugesetzt werden.

In einer besonders bevorzugten Ausführungsform enthalten wässrige Desinfektionsmittelzusammensetzungen mit ausgezeichneter Wirkung sowohl gegen Spulwurmeier als auch gegen Coccidienoozysten mindestens einen Desinfektionswirkstoff aus der aus Formaldehyd, i-Propanol, p-Chlor-m-kresol, Natriumhypochlorit, Wasserstoffperoxid, Peroxyessigsäure und PVP-Jod bestehenden Gruppe, UFSE-Sulfonate und endgruppenverschlossene Fettalkoholpolyalkylenglykolether der Formel (I), wobei auch für diese Zusammensetzungen die weiter oben gemachten Mengen-, bzw. Konzentrationsangaben gelten.

Die erfindungsgemäßen wässrigen Desinfektionsmittelzusammensetzungen mit parasitenabtötender Wirkung kommen in der Regel als Konzentrate in den Handel, die maximal 35 Gew.-% Wasser enthalten. Vor der Anwendung zur Desinfektion gegen parasitäre Dauerformen, beispielsweise in Geflügel-, Schweine- oder Rinderställen, werden die Desinfektionsmittelkonzentrate mit Wasser so weit verdünnt, daß sie gebrauchsfertige Lösungen ergeben, die, bezogen auf ihr Gesamtgewicht, 0,1 bis 5 Gew.-% Desinfektionswirkstoff und 0,5 bis 3 Gew.-% UFSE-Sulfonate oder eines Gemisches aus UFSE-Sulfonate und endgruppenverschlossem Fettalkoholpolyalkylenglykolether der Formel (I) enthalten.

Die gebrauchsfertigen wässrigen Desinfektionsmittelzusammensetzungen werden in üblicher Weise in den für die Tierhaltung benutzten Räumlichkeiten wie Stallungen, Tierboxen oder -käfigen auf die Flächen versprüht oder in den von Parasiten befallenen Räumen vernebelt und bewirken bei gleichmäßiger Verteilung eine sichere Abtötung der invasionsfähigen parasitären Dauerformen. Ein besonderer Vorteil der erfindungsgemäßen Desinfektionsmittel bzw. der mit ihnen hergestellten verdünnten Anwendungslösung besteht darin, daß weder bei der Herstellung noch beim Versprühen giftige oder brennbare Dämpfe auftreten, wie sie aus früheren Desinfektionsmitteln, die $CS_2$ oder perhalogenierte Kohlenwasserstoffe enthielten, bekannt waren. Dadurch wird die Gefahr von Explosionen oder Bränden wie auch die Gefahr einer Vergiftung von Personal oder Nutztieren auf ein Minimum reduziert, wenn nicht ganz beseitigt. Zudem zeigen derartige Desinfektionsmittel eine hervorragende Wirksamkeit bei der Bekämpfung parasitärer invasionsfähiger Dauerformen, wie beispielsweise Spulwurmeiern und/oder Coccidienoozysten. Die erfindungsgemäßen Desinfektionsmittel erreichen in der beschriebenen Verwendung deutlich bessere Ergebnisse, als sie nach den Richtlinien für die Prüfung chemischer Desinfektionsmittel der Deutschen Veterinärmedizinischen Gesellschaft (DVG) gefordert werden. Nach diesen Richtlinien darf ein Präparat nur dann als wirksam deklariert werden, wenn damit bei Ascarideneiern eine Abtötungsrate von über 90 % erzielt wird; bei den invasionsfähigen Dauerformen der Coccidien müssen alle Oozysten so weit denaturiert werden, daß sie nicht mehr infektiös sind. Mit den erfindungsgemäßen Mitteln ist eine Abtötungsrate von über 98 % bei Eiern und eine praktisch quantitative Vernichtungsrate bei den Oozysten schon bei Anwendungskonzentrationen und Einwirkungszeiten zu erreichen, die deutlich unter den Werten für aus dem Stand der Technik bekannte Desinfektionsmittel für den gleichen Zweck liegen.

Die Erfindung wird durch die nachfolgenden Beispiele näher erläutert.

Beispiele

Beispiele 1 und 2

Auf der Grundlage der folgenden Standardrezeptur

| (GT = Gewichtsteile) | |
|---|---|
| 30 GT | Isopropanol (80 %ig) |
| 25 GT | UFSE-Sulfonat |
| 15 GT | eines mit n-Butylresten endgruppenverschlossenen Anlagerungsproduktes von 9 Mol Ethylenoxid an 1 Mol Fettalkohol der Kettenlänge $C_{12}$-$C_{18}$ (50 %ig |
| 12 GT | p-Chlor-m-kresol |
| 6 GT | Natriumpentadecansulfonat (94 %ig) |
| 0,525 GT | Phosphorsäure (75 %ig) |
| 11,475 GT | vollentsalztes Wasser |

wurden Desinfektionsmittelkonzentrate zusammengestellt und so lange gerührt bis alle Bestandteile gelöst waren.

Im Beispiel 1 wurde als UFSE-Sulfonat ein Produkt eingesetzt, das durch Sulfonierung eines Methylesters einer technischen Ölsäure (Zusammensetzung des Fettsäureanteils in Gew.-%: gesättigt: 1 % $C_{12}$; 3 % $C_{14}$; 0,5 % $C_{15}$; 5 % $C_{16}$; 1 % $C_{17}$; 2 % $C_{18}$; einfach ungesättigt: 6 % $C_{16}$; 70 % $C_{18}$; 1 % $C_{20}$; zweifach ungesättigt: 10 % $C_{18}$; dreifach ungesättigt: 0,5 % $C_{18}$; Säurezahl 199-204; Verseifungszahl 200-205; Jodzahl 88-96) mit Schwefeltrioxid im Molverhältnis 1 : 1,1 bei 20 ° C und anschließende Neutralisation und Hydrolyse mit 50 gew.-%iger Natriumhydroxidlösung erhalten worden war (UFSE-Sulfonat A).

Im Beispiel 2 wurde als UFSE-Sulfonat ein Produkt eingesetzt, das durch Sulfonieren eines Isobutylesters der für Beispiel 1 beschriebenen Ölsäure mit Schwefeltrioxid im Molverhältnis 1 : 1,1 bei 20 ° und anschließender Neutralisation und Hydrolyse mit 50 gew.-%iger Natriumhydroxidlösung erhalten worden war (UFSE-Sulfonat B).

Bei der Prüfung der erfindungsgemäßen Mittel auf ihre Wirksamkeit wurden jeweils 5 Volumenteile Konzentrat mit vollentsalztem Wasser auf 200 Volumenteile gebrauchsfertige Desinfektionsmittellösung aufgefüllt.

Zur Prüfung der Wirksamkeit der Desinfektionsmittel an parasitären Dauerformen wurden sporulierte Oozysten (infektiöse Stadien) der Hühnercoccidiose verwendet. Jeweils 50 ml der gebrauchsfertigen Desinfektionsmittellösung wurden mit so viel Coccidienoozysten versetzt, daß deren Konzentration 2000 Stück/ml betrug. In einer Schüttelapparatur wurden die Proben 4 Stunden lang bei Raumtemperatur geschüttelt. Danach wurden die festen Bestandteile der Proben abzentrifugiert und in 50 ml gesättigter Natriumchloridlösung aufgeschlämmt. An aliquoten Anteilen der dabei erhaltenen Suspensionen wurde in einer Zählkammer nach MacMaster die Anzahl der überlebenden Oozysten ermittelt und durch Vergleich mit einer Blindprobe (2000 Oozysten/ml in vollentsalztem Wasser), die der gleichen Schüttelbehandlung unterworfen war, die Abtötungsrate ermittelt.

Als Vergleichszusammensetzung diente ein Desinfektionsmittel des Standes der Technik (DE-OS 23 17 225), das folgende Zusammensetzung hatte:

| 40 GT | Isopropanol (80 %ig) |
|---|---|
| 20 GT | Perchlorethylen |
| 16 GT | p-Chlor-m-kresol |
| 8 GT | Natriumpentadecansulfonat (94 %ig) |
| 0,7 GT | Phosphorsäure (75 %ig) |
| 15,3 GT | vollentsalztes Wasser |

Auch hier wurden zur Herstellung der gebrauchsfertigen Desinfektionsmittellösung 5 Volumenteile Konzentrat mit vollentsalztem Wasser auf 100 Volumenteile aufgefüllt.

Die mit den vorstehend beschriebenen Zusammensetzungen erzielten Abtötungsraten sind in der letzten Spalte der Tabelle I angegeben.

TABELLE I

| Wirksamkeit der Zusammensetzungen mit einem Gehalt an UFSE-Sulfonaten gegen Coccidienoozysten | | |
|---|---|---|
| Beispiel I | oberflächenaktiver Wirkstoff | Abtötungsrate (%) |
| 1 | UFSE-Sulfonat A | 99,7 |
| 2 | UFSE-Sulfonat B | 93,5 |
| Vergleichszusammensetzung | | 88,0 |

Beispiel 3

Aus den folgenden Komponenten wird ein Desinfektionsmittelkonzentrat zusammengestellt und so lange gerührt bis alle Bestandteile gelöst sind:

| | |
|---|---|
| 65 GT | Wasserstoffperoxidlösung (65 %ig) |
| 15 GT | eines mit n-Butylresten endgruppenverschlossenen Anlangerungsproduktes von 9 Mol Ethylenoxid an 1 Mol Fettalkohol der Kettenlänge $C_{12}$-$C_{18}$ (50 %ig) |
| 20 GT | des UFSE-Sulfonats A aus Beispiel 1. |

Zur Anwendung gegen parasitäre Dauerformen (z.B. Oozysten der Hühnercoccidiose oder Eier des Schweinespulwurms) werden 5 Volumenteile des Konzentrats mit Wasser auf 100 Volumenteile gebrauchsfertige Lösung aufgefüllt.

Beispiel 4

Aus den folgenden Komponenten wird ein Desinfektionsmittelkonzentrat zusammengestellt und so lange gerührt bis eine homogene Lösung entstanden ist:

| | |
|---|---|
| 20,7 GT | Formaldehyd (37 %ig) |
| 20,7 GT | Glyoxal (40 %ig) |
| 5,2 GT | Glutaraldehyd (50 %ig) |
| 3,45 GT | Oligohexamethylenbiguanid-hydrochlorid (n = 4-6) (20 %ig) |
| 3,7 GT | $C_{12}$-$C_{14}$-Alkylbenzyldimethylammoniumchlorid |
| 1,4 GT | Natriumbenzoat |
| 15 GT | des UFSE-Sulfonats B aus Beispiel 2 |
| 1,2 GT | Natriumhydroxidlösung (50 %ig) |
| 3,65 GT | Farbstoff, Parfüm und vollentsalztes Wasser |

Zur Herstellung von gebrauchsfertigen Lösungen werden 5 Volumenteile Konzentrat mit Wasser auf 100 Volumenteile aufgefüllt.

**Ansprüche**

1. Wässrige Desinfektionsmittelzusammensetzungen zur Bekämpfung und Abtötung von parasitären, invasionsfähigen Dauerformen auf der Basis von Gemischen aus Desinfektionswirkstoffen und oberflächenaktiven Wirkstoffen, dadurch gekennzeichnet, daß sie

a) mindestens einen Desinfektionswirkstoff aus der aus aliphatischen Aldehyden mit 1 bis 5 C-Atomen, aliphatischen Alkoholen mit 1 bis 4 C-Atomen, unsubstituierten und substituierten Phenolen, Aktivchlor-Aktivsauerstoff- und Aktivjodverbindungen bestehenden Gruppe und

b) mindestens ein Sulfonatsalz eines Esters einer ungesättigten $C_{16}$-$C_{22}$-Fettsäure mit einem geradkettigen oder verzweigten aliphatischen $C_1$-$C_6$-Alkohol (UFSE-Sulfonat)

enthalten.

2. Wässrige Desinfektionsmittelzusammensetzungen nach Anspruch 1, dadurch gekennzeichnet, daß sie mindestens einen Desinfektionswirkstoff aus der Gruppe Formaldehyd, Glyoxal, Glutardialdehyd, Methanol, Ethanol, n-Propanol, i-Propanol, Phenol, chlorierte Phenole, wasserlösliche Alkalimetallhypohalogenite, Wasserstoffperoxid, Peroxycarbonsäuren mit 1 bis 4 C-Atomen und PVP-Jod enthalten.

3. Wässrige Desinfektionsmittelzusammensetzungen nach mindestens einem der Ansprüche 1 und 2, dadurch gekennzeichnet, daß sie einen oder mehrere Desinfektionswirkstoffe aus der Gruppe Formaldehyd, i-Propanol, p-Chlor-m-kresol, Natriumhypochlorid, $H_2O_2$, Peroxyessigsäure und PVP-Jod enthalten.

4. Wässrige Desinfektionsmittelzusammensetzungen nach mindestens einem der Ansprüche 1 bis 3, dadurch gekennzeichen, daß sie Sulfonatsalze von Estern technischer Ölsäure enthalten.

5. Wässrige Desinfektionsmittelzusammensetzungennach mindestens einem der Ansprüche 1 bis 4, dadurch gekennzeichnet, daß sie UFSE-Sulfonate enthalten, deren Kation aus der aus Natrium, Kalium, Lithium, Ammonium, Ethanolammonium, Diethanolammonium und Triethanolammonium bestehenden Gruppe ausgewählt ist.

6. Wässrige Desinfektionsmittelzusammensetzungen nach mindestens einem der Ansprüche 1 bis 5, dadurch gekennzeichnet, daß sie, bezogen auf ihr Gesamtgewicht,

| 0,1 bis 80 Gew.-% | Desinfektionswirkstoffe aus der in Anspruch 1 definierten Gruppe und |
|---|---|
| 0,5 bis 50 Gew.-% | UFSE-Sulfonat |

enthalten.

7. Wässrige Desinfektionsmittelzusammensetzungen nach Anspruch 6, dadurch gekennzeichnet, daß sie, bezogen auf ihr Gesamtgewicht,

| 5 bis 80 Gew.-% | Desinfektionswirkstoffe aus der in Anspruch 1 definierten Gruppe und |
|---|---|
| 10 bis 50 Gew.-% | UFSE-Sulfonat |

enthalten.

8. Wässrige Desinfektionsmittelzusammensetzungen nach mindestens einem der Ansprüche 1 bis 7, dadurch gekennzeichnet, daß sie als oberflächenaktive Wirkstoffe neben den UFSE-Sulfona ten mindestens einen endgruppenverschlossenen Fettalkoholpolyalkylenglykolether der Formel (I) enthalten,

$R^2 - O - (C_nH_{2n}O)_m - R^3$    (I)

in der $R^2$ für einen geradkettigen oder verzweigten Alkyl-oder Alkenylrest mit 8 bis 18 C-Atomen $R^3$ für einen geradkettigen oder verzweigten Alkylrest mit 1 bis 18 C-Atomen, n für 2 oder 3 und m für eine Zahl im Bereich von 1 bis 50 stehen.

9. Wässrige Desinfektionsmittelzusammensetzungenbach Anspruch 8, dadurch gekennzeichnet, daß sie mindestens einen endgruppenverschlossenen Fettalkoholpolyalkylenglykolether der Formel (I) enthalten, in der $R^2$ für einen geradkettigen Alkylrest mit 12 bis 18 C-Atomen, $R^3$ für einen geradkettigen oder verzweigten Alkylrest mit 3 oder 4 C-Atomen, n für 2 und m für Zahlen von 3 bis 10 stehen.

10. Wässrige Desinfektionsmittelzusammensetzungen nach mindestens einem der Ansprüche 8 und 9, dadurch gekennzeichnet, daß sie die UFSE-Sulfonate und die Verbindungen der Formel (I) im Gewichtsverhältnis im Bereich von 1 : 0,1 bis 1 : 1 enthalten.

11. Wässrige Desinfektionsmittelzusammensetzungen nach mindestens einem der Ansprüche 8 bis 10, dadurch gekennzeichnet, daß sie

a) mindestens einen Desinfektionswirkstoff aus der aus Formaldehyd, i-Propanol, p-Chlor-m-kresol, Natriumpypochlorit, Wasserstoffperoxid, Peroxyessigsäure und PVP-Jod, sowie
b) mindestens ein UFSE-Sulfonat und
c) mindestens einen endgruppenverschlossenen Fettalkoholpolyalkylenglykolether der Formel (I) enthalten.

12. Verwendung der wässrigen Desinfektionsmittelzusammensetzungen nach den Ansprüchen 1 bis 11 zur Bekämpfung und Abtötung von parasitären invasionsfähigen Dauerformen.

13. Verwendung der Desinfektionsmittelzusammensetzungen nach den Ansprüchen 1 bis 11 zur Bekämpfung und Abtötung von Spulwurmeiern und Coccidienoozysten.

14. Verwendung der Desinfektionsmittel nach den Ansprüchen 1 bis 11 zur Bekämpfung und Abtötung von parasitären invasionsfähigen Dauerformen in verdünnten wässrigen Lösungen, die, bezogen auf ihr Gesamtgewicht, 0,1 bis 5 Gew.-% Desinfektionswirkstoff und 0,5 bis 3 Gew.-% UFSE-Sulfonat oder eines Gemisches aus UFSE-Sulfonat und endgruppenverschlossene Fettalkoholpolyalkylenglykolether der Formel (I) enthalten.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X,P | EP-A-0 265 825 (HENKEL) <br> * Ansprüche; Seite 4, Zeilen 35-41 * <br> --- | 1-14 | A 01 N 25/30 <br> A 01 N 31/02 <br> A 01 N 31/08 <br> A 01 N 35/02 <br> A 01 N 37/16 <br> A 01 N 59/00 <br> A 01 N 59/12 |
| A | FR-A-2 224 170 (HENKEL) <br> * Ansprüche; Seite 2, Zeilen 13-21 * & <br> DE-A-2 317 225 (Kat. D) <br> --- | 1-14 | |
| A | CHEMICAL ABSTRACTS, Band 104, Nr. 7, 17. Februar 1986, Seite 182, Zusammenfassung Nr. 47059g, Columbus, Ohio, US; V.F. ABRAMOVA et al.: "Deinfestation media in coccidiosis of rabbits", & PROFIL. PARAZIT. BOLEZN. ZHIVOTN. 1985, 30-3 <br> ----- | 1-3,11-14 | |

RECHERCHIERTE SACHGEBIETE (Int. Cl.4)

A 01 N

Der vorliegende Recherchenbericht wurde für alle Patentansprüche erstellt

| Recherchenort | Abschlußdatum der Recherche | Prüfer |
|---|---|---|
| DEN HAAG | 01-08-1989 | DECORTE D. |